# EUROPEAN PATENT SPECIFICATION

(11) **EP 4 407 512 B1**
(45) Date of publication and mention of the grant of the patent: **06.05.2026**
(21) Application number: 22872705.3
(22) Date of filing: 06.09.2022
(51) Int. Cl.: G06K 19/077, G06K 19/06, G06K 19/14

(54) **RFID CONTAINER AND PRODUCTION METHOD FOR RFID CONTAINER**
RFID-BEHÄLTER UND HERSTELLUNGSVERFAHREN FÜR RFID-BEHÄLTER
RÉCIPIENT D'IDENTIFICATION PAR RADIOFRÉQUENCE (RFID) ET PROCÉDÉ DE PRODUCTION D'UN RÉCIPIENT D'IDENTIFICATION PAR RADIOFRÉQUENCE (RFID)

(30) Priority: 24.09.2021 JP 2021155702
(43) Date of publication of application: 31.07.2024
(73) Proprietor: SATO Corporation, Tokyo 108-0023 (JP)
(72) Inventor: NITTA, Haruhiko, Tokyo 108-0023 (JP)
(74) Representative: Grünecker Patent- und Rechtsanwälte PartG mbB
(86) International application number: PCT/JP2022/033470
(87) International publication number: WO 2023/047949

(56) References cited:
- WO-A1-2018/163111
- JP-A- 2015 219 891
- JP-A- 2019 051 616
- JP-A- 2020 030 703
- JP-A- 2020 030 703
- JP-A- 2021 140 439
- JP-A- 2021 140 439

## Description

### TECHNICAL FIELD

The present invention relates to an RFID container and a manufacturing method for an RFID container.

### BACKGROUND ART

A manufacturing method for an RFID container as described in the preamble of claim 1 and an RFID container as described in the preamble of claim 12 are already known from JP 2020 030703 A. JP 2021 140439 A discloses a similar manufacturing method for an RFID container as described in the preamble of claim 1 and a similar RFID container as described in the preamble of claim 12. WO 2018/163111 A1 refers to container labels. In the related art, a label that can be attached to a cylindrical body such as a blood-collecting tube or a test tube has been proposed (see JP H11-73109A). The label described in JP H11-73109A has perforations or through holes formed in label end portions in order to prevent the label end portions from floating without following a curved surface of the test tube.

In recent years, in fields of manufacture, management, distribution, and the like of products, movements have been promoted to apply a radio frequency identification (RFID) technique for transmitting and receiving information by non-contact communication to and from an IC chip in which information related to the products and identification information are written.

In order to mount an RFID-corresponding antenna and an IC chip on a container such as a blood-collecting tube or a test tube, for example, a method has been adopted in which an RFID inlay in which an antenna and an IC chip are provided on an inlay base material is manufactured in advance, and the RFID inlay is attached to the container as a label or attached to the container as a tag.

### SUMMARY OF INVENTION

In a case of the container such as a blood-collecting tube or a test tube, the container may be used in a severe environment such as an extremely low temperature or a high temperature and high humidity. Therefore, in the method of mounting the RFID antenna and the IC chip on the container using the RFID inlay, environmental followability of the inlay base material exceeds an allowable range, and accordingly, the RFID antenna and the IC chip may remove off.

Therefore, an object of the present invention is to provide a manufacturing method for an RFID container and an RFID container capable of preventing an RFID antenna and an IC chip from removing off.

The above and other objects of the invention are solved by the manufacturing method for an RFID container according to claim 1 and the RFID container according to claim 12. Preferred embodiments are claimed in the dependent claims. According to an embodiment of the present invention, there is provided a manufacturing method for an RFID container having an antenna and an IC chip, including: a process of temporarily attaching the antenna to a base material by a first adhesive; a process of fixing the IC chip to the antenna; a process of attaching a front surface of the container and a surface of the base material on which the antenna is formed by a second adhesive; and a process of removing, while leaving a partial region of the base material covering the IC chip on the front surface of the container, a region of the base material other than the partial region covering the IC chip from the container.

According to the above-mentioned embodiment, the antenna and the IC chip are directly attached to the front surface of the container. According to the embodiment of the present invention, since no RFID inlay is present, floating of an RFID inlay from a front surface of an adherend does not occur. Therefore, the RFID antenna and the IC chip can be prevented from removing off.

### BRIEF DESCRIPTION OF DRAWINGS

[FIG.1] FIG. 1 is a view illustrating an appearance of an RFID container according to an embodiment of the present invention.
[FIG. 2] FIG. 2 is a schematic view illustrating a preceding process of a process of temporarily attaching an antenna to a base material sheet in the manufacturing method for an RFID container according to the embodiment of the present invention.
[FIG. 3] FIG. 3 is a schematic view illustrating a process of applying a first adhesive for temporarily attaching the antenna to the base material sheet.
[FIG. 4] FIG. 4 is a schematic view illustrating a process of temporarily attaching the antenna to the base material sheet.
[FIG. 5] FIG. 5 is a schematic view illustrating a process of fixing an IC chip to the antenna.
[FIG. 6] FIG. 6 is a schematic view illustrating a process of reversely printing an identification code in a printing region surrounded by a tear-off line on the base material sheet.
[FIG. 7] FIG. 7 is a view illustrating a process of providing a second adhesive on a front surface of the container.
[FIG. 8] FIG. 8 is a view illustrating a process of pressing the antenna formed on the base material sheet against the container.
[FIG. 9] FIG. 9 is a view illustrating a process of attaching the antenna formed on the base material sheet so as to follow an outer surface of the container.
[FIG. 10] FIG. 10 is a view illustrating a process of attaching the antenna formed on the base material sheet so as to follow the outer surface of the container.
[FIG. 11] FIG. 11 is a view illustrating a state in which the antenna is peeled off from the base material sheet and attached to the front surface of the container.
[FIG. 12] FIG. 12 is a view illustrating a state in which the antenna is attached to the front surface of the container.

### DESCRIPTION OF EMBODIMENTS

### [RFID Container]

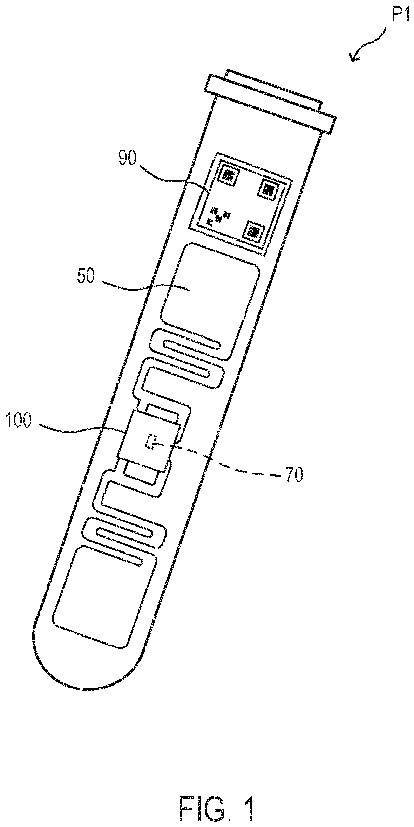

FIG. 1 is a view illustrating an appearance of an RFID container according to an embodiment of the present invention. In the present embodiment, the RFID container refers to a container P1 in which an antenna 50 and an IC chip 70 corresponding to a radio frequency identification (RFID) technique for transmitting and receiving information by non-contact communication are incorporated and information related to contents and the like can be written in the IC chip 70.

In the present embodiment, the container P1 is a test tube. The container P1 does not have a so-called RFID inlay in which an antenna and an IC chip are provided on an inlay base material, and as illustrated in FIG. 1, the container P1 includes, on a front surface of the container P1, the antenna 50 to which the IC chip 70 is fixed and a printed portion 90 on which an identification code is printed. A region to which the IC chip 70 is fixed is covered with a protective base material 100. In addition, front surfaces of the printed portion 90, the antenna 50, and the protective base material 100 are covered with a protective film layer.

### [Manufacturing Method for RFID Container]

The manufacturing method for an RFID container according to the present embodiment is a method of preparing the antenna 50 to which the IC chip 70 is fixed to a front surface of a base material sheet 10, peeling the antenna 50 to which the IC chip 70 is fixed from the base material sheet 10, and attaching the antenna 50 to the front surface of the container P1.

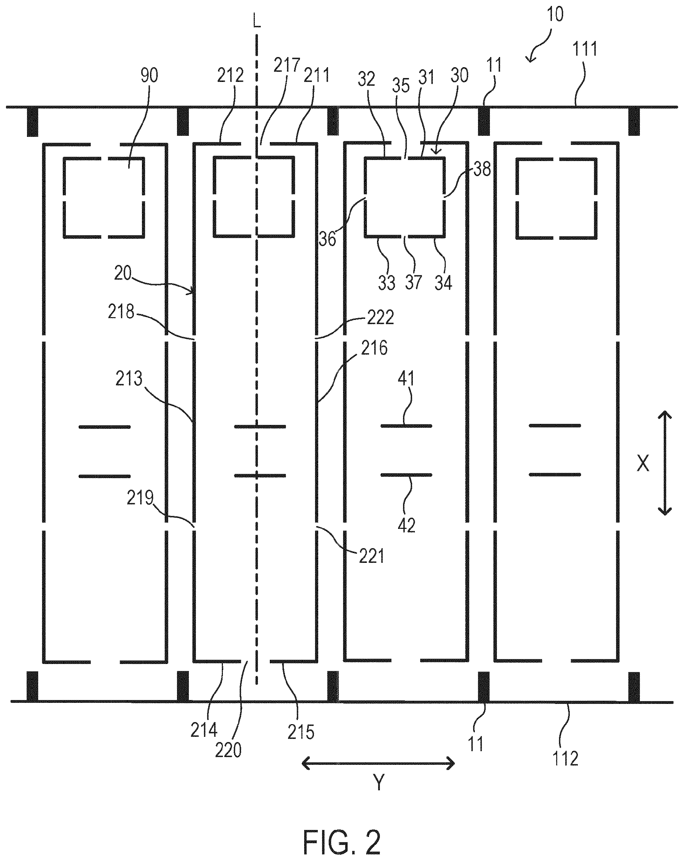

FIG. 2 is a schematic view illustrating a preceding process of a process of temporarily attaching the antenna 50 to the base material sheet 10 in the manufacturing method for an RFID container according to the embodiment of the present invention. FIG. 2 illustrates the base material sheet 10 after the preceding process is performed.

In the present embodiment, as illustrated in FIG. 2, a longitudinal direction of the base material sheet 10 is defined as a Y direction, and an X direction intersecting the Y direction is defined as a width direction of the base material sheet 10.

As illustrated in FIG. 2, in the present embodiment, first, while the base material sheet 10 having an elongated shape is conveyed along the Y direction, reference marks 11 are printed on side edge portions 111 and 112 of the base material sheet 10 by a printer (not illustrated).

For example, the reference marks 11 are read by an optical sensor or the like provided in the printer when the printer executes printing on the base material sheet 10, and are used for detecting a printing position. In addition, the reference marks 11 are also used for, in a subsequent process, position detection for forming tear-off lines 20 and 30 and the like, position detection when a first adhesive A1 is applied to the base material sheet 10, and the like.

In the present embodiment, the reference marks 11 are printed at intervals corresponding to a pitch (interval in the Y direction) of the antenna 50 formed in the subsequent process.

In the present embodiment, the reference marks 11 can be printed by the printer (not illustrated) while conveying the base material sheet 10 in the longitudinal direction (Y direction in FIG. 2) of the base material sheet 10.

Following the printing of the reference marks 11, the tear-off line 20 and cut portions 41 and 42 as a first tear-off line are formed on the base material sheet 10. In addition, the tear-off line 30 as a second tear-off line is formed.

The tear-off line 20 is formed so as to surround the entire antenna 50 formed on the base material sheet 10 in the subsequent process.

The tear-off line 20 includes cut portions 211, 212, 213, 214, 215, and 216 as a first cut portion and uncut portions 217, 218, 219, 220, 221, and 222 as a first uncut portion.

The cut portions 41 and 42, which are part of the first tear-off line, constitute a tear-off line for cutting out a portion corresponding to a region where the IC chip 70 is fixed together with cut portions 44, 45, 47, and 48 to be described later.

In the present embodiment, the cut portions 41 and 42 which are cuts intersecting with a part of the antenna 50 are formed before the process of temporarily attaching the antenna 50 to the base material sheet 10.

In the present embodiment, the uncut portion 217 and the uncut portion 220 of the tear-off line 20 are formed so as to coincide with each other on a virtual line L continuous in the width direction (X direction) of the base material sheet 10.

The virtual line L is also a center line assumed to be substantially the center of a width of the antenna 50 in the Y direction, and serves as a starting point when the antenna 50 is attached to the container P1 in the subsequent process.

The uncut portion 217 and the uncut portion 220 are set to have a width length that can ensure strength at which the uncut portion 217 and the uncut portion 220 are not broken. On the other hand, the uncut portions peeled off from the base material sheet 10, the antenna 50 may be transferred to another base material such that an adhesion surface between the base material sheet 10 and the antenna 50 becomes a front surface, and the antenna 50 may be attached to the container from the another base material.

As described above, since the process of forming the antenna 50 on the base material sheet 10 and the process of attaching the antenna 50 to the container can be separated by temporarily transferring the antenna 50 to another base material, a degree of freedom in manufacturing is increased.

In the present embodiment, the tear-off line 30 that partitions the printed portion 90 on which the identification code is printed is formed before the process of temporarily attaching the antenna 50 to the base material sheet. However, the tear-off line 30 may be formed in the process of forming the antenna 50 using the die roll for forming the antenna 50.

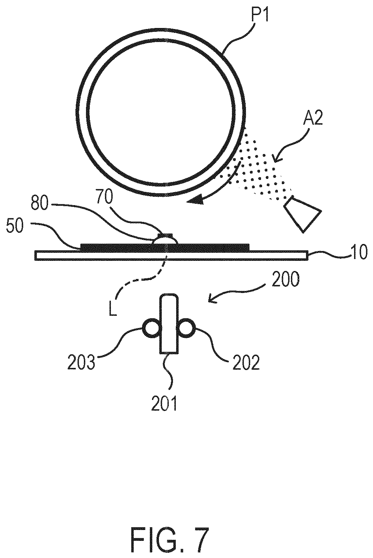

The process of attaching the antenna 50 to the container P1 described with reference to FIGS. 7 to 12 is an example suitably used for a cylindrical container P1. In the present embodiment, a form and a shape of the container P1 are not limited to the test tube of the embodiment. For example, the container may be a box, a bag, or the like.

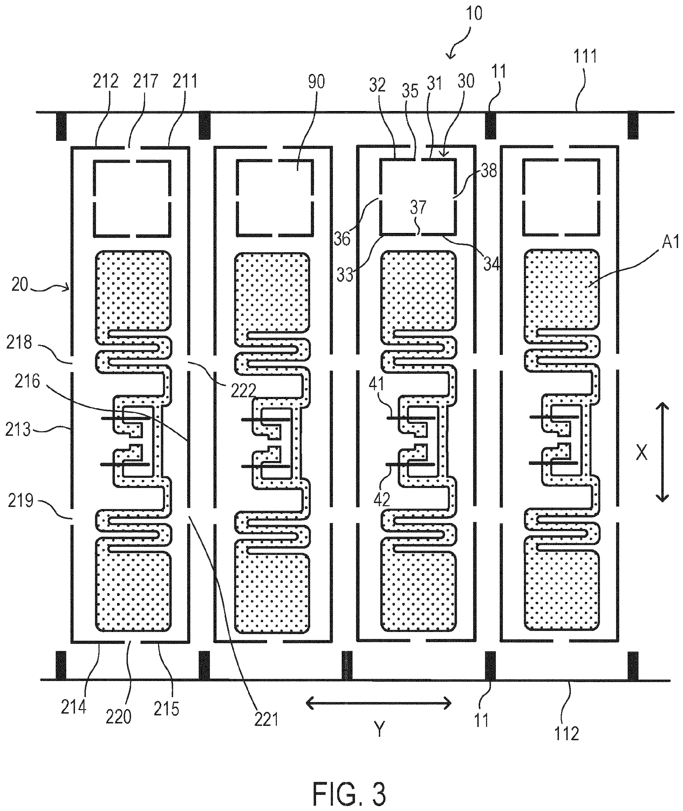

FIG. 3 is a schematic view illustrating a process of applying the first adhesive A1 for temporarily attaching the antenna 50 to the base material sheet 10. FIG. 3 illustrates the base material sheet 10 after the first adhesive A1 is applied.

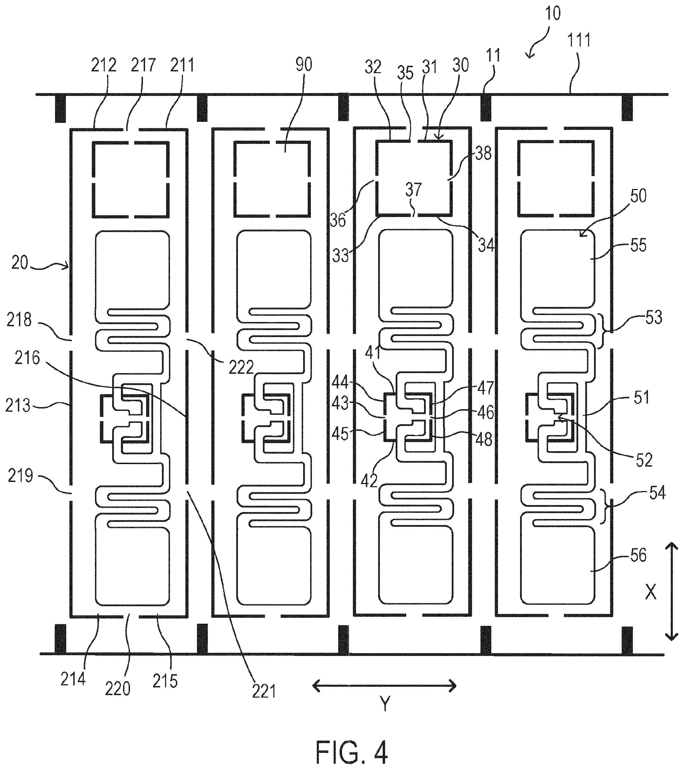

In the process illustrated in FIG. 3, the first adhesive A1 for temporarily attaching the antenna 50 illustrated in FIG. 4 is applied to the base material sheet 10. In the present embodiment, as the first adhesive A1, a removable paste that enables the antenna 50 to be attached to be removed from the base material sheet 10 as an adherend is used.

In this process, when the first adhesive A1 is applied to the conveyed base material sheet 10, for example, a plate roller can be used in which a convex pattern matching a pattern of the antenna 50 is wound around a plate cylinder.

The convex pattern formed on the plate roller has a shape that fits inside the perimeter line (outline) of the pattern of the antenna 50 arranged on the base material sheet 10.

By forming a plurality of convex patterns matching the pattern of the antenna 50 in a circumferential direction of the plate roller, when the plate roller is rotated while the base material sheet 10 is conveyed, the first adhesive A1 having the same shape as the pattern of the antenna 50 can be continuously applied to the base material sheet 10 as illustrated in FIG. 3.

FIG. 4 is a schematic view illustrating the process of temporarily attaching the antenna 50 to the base material sheet 10. FIG. 4 illustrates a state where a predetermined pattern of the antenna 50 is formed on the base material sheet 10.

As illustrated in FIG. 4, the antenna 50 formed in the present embodiment includes a loop portion 51, an IC chip connection portion 52 on which the IC chip 70 is mounted, meanders 53 and 54 extending symmetrically in the width direction (X direction) of the base material sheet 10 from the loop portion 51, and capacitors hats 55 and 56 connected to end portions of the meanders 53 and 54.

The process of temporarily attaching the antenna 50 to the base material sheet 10 further includes a process of stucking a metal sheet for constituting the antenna 50 on the first adhesive A1 provided on the base material sheet 10, which is described with reference to FIG. 3.

Subsequent to this process, a process of cutting out the metal sheet stucked on the base material sheet 10 into the shape of the antenna 50 is executed. Further, a process of removing an unnecessary portion of the metal sheet not constituting the antenna 50 from the base material sheet 10 is executed.

In the process of stucking the metal sheet on the base material sheet 10, a pressing roller and a support roller can be used as an example. By stucking the metal sheet on the base material sheet 10 and inserting the metal sheet between the pressing roller and the support roller, the metal sheet is temporarily attached to the base material sheet 10.

In addition, in the process of cutting out the metal sheet stucked on the base material sheet 10 into the shape of the antenna 50, a cut unit having a die roll for forming the pattern of the antenna 50 and an anvil roller for backing up the die roll can be used.

In the present embodiment, on a front surface of the die roll, there are formed a first convex blade portion having the perimeter line (outline) shape of the pattern of the antenna 50, an uncut portion 43 and the cut portions 44 and 45, and a second convex blade portion for forming an uncut portion 46 and the cut portions 47 and 48.

On the front surface of the die roll, the second convex blade portion is formed higher than the first convex blade portion. Accordingly, cuts having different depths can be simultaneously formed by one cutting.

The cut unit sandwiches and conveys the base material sheet 10 on which the metal sheet is stucked, and thus the pattern of the antenna 50 is partitioned in the metal sheet by the first convex blade portion. In this case, the second convex blade portion penetrates the metal sheet and the base material sheet 10 to form the cut portions 44, 45, 47, and 48.

Accordingly, by the cut portions 41 and 42 formed before the process of temporarily attaching the antenna 50 to the base material sheet 10 and the cut portions 44, 45, 47, and 48 formed simultaneously with the process of forming the pattern of the antenna 50, a tear-off line for cutting out the base material sheet 10 corresponding to the antenna 50 to which the IC chip 70 is fixed as the protective base material 100 for protecting the IC chip 70 is completed.

Since the uncut portions 43 and 46 are left on the tear-off line formed by the cut portions 41 and 42 and the cut portions 44, 45, 47, and 48, the protective base material 100 is not separated from the base material sheet 10 in procedures of the process of forming the pattern of the antenna 50, but the uncut portions 43 and 46 are set to have a width length with which the uncut portions 43 and 46 can be broken in the subsequent process.

The first convex blade portion and the second convex blade portion may be flexible dies. In addition, the convex blade portions may be formed by an engraving blade, a planting blade, or the like.

Next, unnecessary portions of the metal sheet not constituting the pattern of the antenna 50 are removed.

A peeling roller can be used to remove the unnecessary portions. The unnecessary portions of the metal sheet can be peeled off and removed by conveying the unnecessary portions of the metal sheet along a part of the peeling roller in a direction different from a conveying direction of the base material sheet 10.

Since the first adhesive A1 applied to the base material sheet 10 is not present on an outer side of the perimeter line of the pattern of the antenna 50, a portion of the metal sheet other than the region where the pattern of the antenna 50 is formed is not attached to the base material sheet 10.

Therefore, it is possible to leave the pattern of the antenna 50 on the base material sheet 10 and to remove the metal sheet (unnecessary portions) other than the pattern of the antenna 50. The unnecessary portions are subjected to a recycling process after being recovered, and can be used again as a metal sheet.

In the present embodiment, fine portions such as an island portion of the loop portion 51 of the antenna 50 and gaps in the meanders 53 and 54 may not be sufficiently removed only by being separated by the peeling roller, for example, vacuum removal or the like is used together.

As described above, the antenna 50 can be formed on the base material sheet 10.

In the present embodiment, the antenna 50 is, for example, a UHF band RFID antenna designed to have an antenna length and an antenna line width corresponding to a UHF band (300 MHz to 3 GHz, particularly 860 MHz to 960 MHz).

In addition, the antenna 50 may be designed in a pattern corresponding to a specific frequency band such as a microwave (1 GHz to 30 GHz, particularly around 2.4 GHz) and an HF band (3 MHz to 30 MHz, particularly around 13.56 MHz) according to the RFID specification.

As the metal sheet constituting the antenna 50, any conductive metal usually used for antenna formation can be applied. Examples thereof include copper and aluminum. In addition, a thickness of the metal sheet may be 3 µm or more and 25 µm or less.

In the present embodiment, it is preferable to use an aluminum foil having a thickness of 20 µm as the metal sheet from the viewpoint of reducing the manufacturing cost while satisfying an antenna performance.

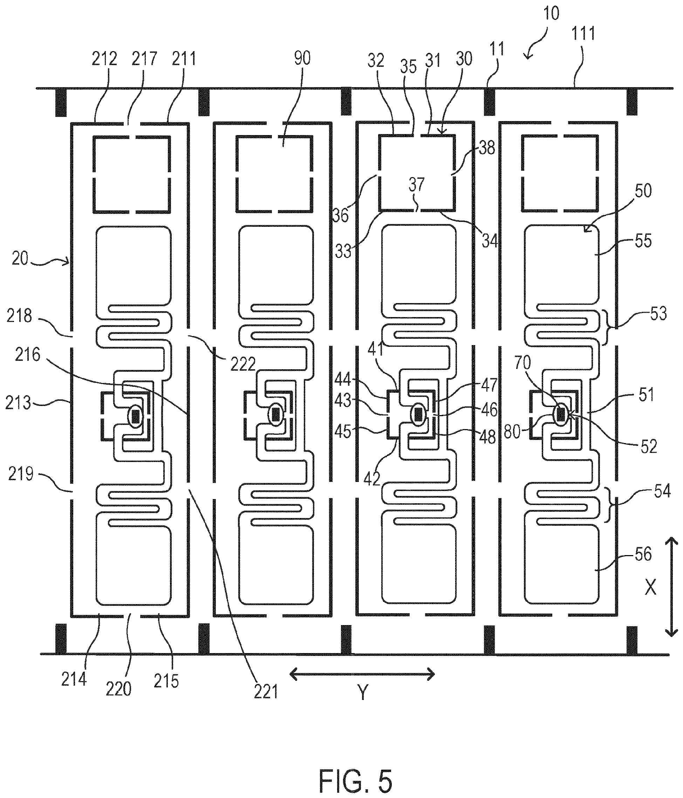

FIG. 5 is a schematic view illustrating a process of fixing the IC chip 70 to the antenna 50. The IC chip 70 is electrically and mechanically connected to the IC chip connection portion 52 provided in a part of the loop portion 51 of the antenna 50 by an anisotropic conductive material 80 that is cured by an ultraviolet ray. An anisotropic conductive material that cures by heating may be used.

The IC chip 70 is a semiconductor package designed to be able to communicate with a reading device (not illustrated) or a printer including the reading device.

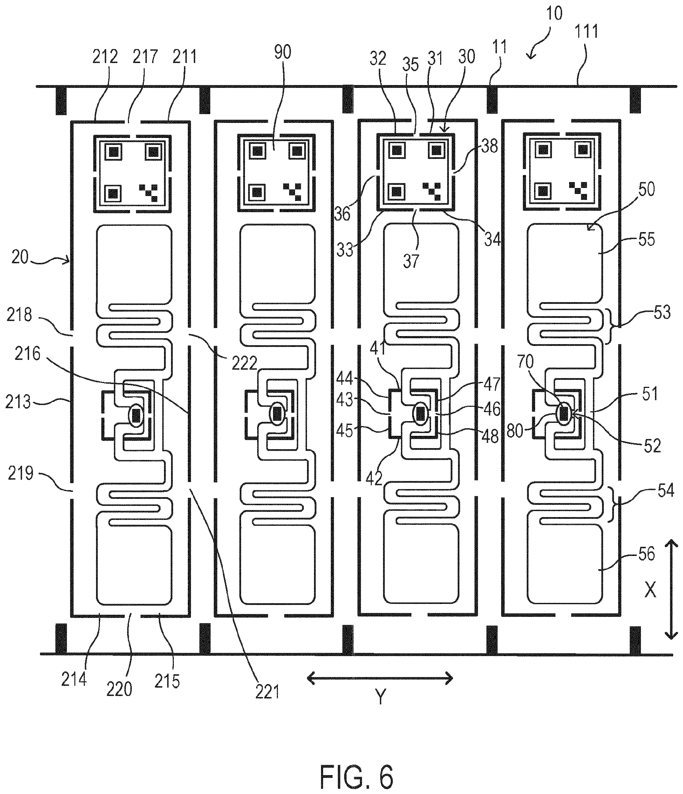

FIG. 6 is a schematic view illustrating a process of reversely printing an identification code on the printed portion 90 surrounded by the tear-off line 30 of the base material sheet 10 after the IC chip 70 is fixed to the antenna 50.

In the present embodiment, information such as the identification code can be printed on the printed portion 90 using a printer (not illustrated). In addition to the printing of the identification code or the like, the information corresponding to the identification code can be written in the IC chip 70.

The printed portion 90 partitioned by the tear-off line 30 is a portion to be separated from the base material sheet 10. Therefore, the information printed on the printed portion 90 can be separated from the base material sheet 10 and attached to the container P1 together with the antenna 50.

In the present embodiment, in a subsequent process, the antenna 50 is reattached to the front surface of the container P1 from the base material sheet 10 in facing the surface of the base material sheet 10 on which the antenna 50 is formed faces the front surface of the container P1. Therefore, the protective base material 100 separated from the base material sheet 10 together with the antenna 50 is located on a front surface side in the container P1.

Similarly, the printed portion 90 is also located on the front surface side in the container P1. Accordingly, the identification code printed on the printed portion 90 is read via the base material sheet 10. Therefore, when the information such as the identification code is printed on the printed portion 90, reverse printing is executed such that the information is recognizable from a rear surface side of the base material sheet 10.

Accordingly, in a state where the printed portion 90 cut out from the base material sheet 10 is attached to the container P1, the information printed on the printed portion 90 is transmitted through the base material sheet 10 and is recognizable in a correct state.

Examples of the identification code include a two-dimensional code and a bar code. In addition, the identification code may be a character identifiable by a user.

Next, a process of removing the base material sheet 10 other than the protective base material 100 from the container P1 while leaving a part (corresponding to the protective base material 100) of the base material sheet 10 covering the IC chip 70 on the front surface of the container P1 will be described.

FIGS. 7 to 12 illustrate a series of processes for transferring the antenna 50 formed on the base material sheet 10 from the base material sheet 10 to the front surface of the container P1.

FIGS. 7 to 12 illustrate the process of attaching the antenna 50 to the container P1 as viewed from a side of the container P1.

FIG. 7 is a view illustrating a process of providing a second adhesive A2 on the front surface of the container P1. In this process, the front surface of the container P1 and the surface of the base material sheet 10 on which the antenna 50 is formed are attached to each other with the second adhesive A2. In the present embodiment, while the container P1 is rotated in an arrow direction in FIG. 7, the second adhesive A2 is provided on the front surface of the container P1 by executing spray coating or the like on a region where the antenna 50 is attached.

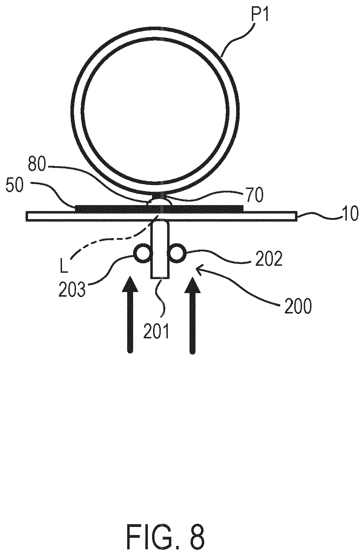

FIG. 8 is a view illustrating a process of pressing the antenna 50 formed on the base material sheet 10 against the container P1. In this process, a pressing mechanism 200 is applied.

The pressing mechanism 200 includes a pressing member 201 and guide rollers 202 and 203 formed to extend on both sides of the pressing member 201. The pressing member 201 is a rod-shaped member that is longer than a length in the X direction of a portion partitioned by the tear-off line 20 of the base material sheet 10. In addition, the guide rollers 202 and 203 are set to be shorter than the length in the X direction of the portion partitioned by the tear-off line 20 of the base material sheet 10.

Therefore, when the guide rollers 202 and 203 move away from each other along the front surface of the container P1 from a region pressed by the pressing member 201, a part on an inner side of the tear-off line 20 of the base material sheet 10 can be pressed toward the container.

When the pressing member 201 is applied along the center line (virtual line L in FIG. 2) of the antenna 50 formed on the base material sheet 10, a region including the portion of the antenna 50 to which the IC chip 70 is fixed and a region including the uncut portions 217 and 220 formed to face each other on a straight line of the virtual line L are attached to the front surface of the container P1.

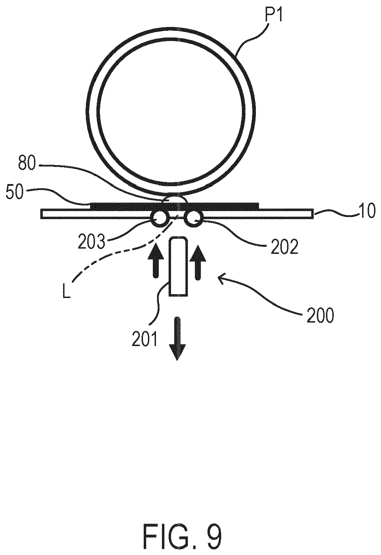

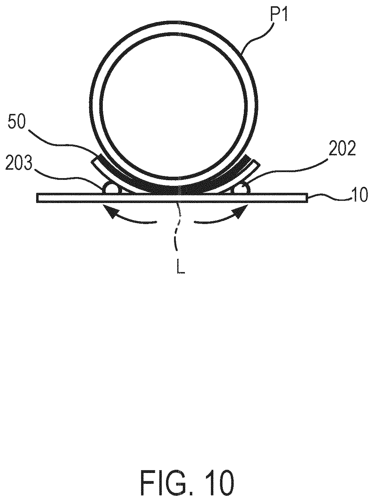

FIGS. 9 and 10 are views illustrating a process of attaching the antenna 50 formed on the base material sheet 10 so as to follow an outer surface of the container P1.

The pressing member 201 presses a region corresponding to the virtual line L of the base material sheet 10, then the pressing member 201 retreats, and instead, the guide rollers 202 and 203 move away from each other along the front surface of the container P1 from the virtual line L.

The guide rollers 202 and 203 are set to be shorter than the length in the X direction of the portion partitioned by the tear-off line 20 in the base material sheet 10, and thus the portion partitioned by the tear-off line 20 in the base material sheet 10 can be pressed against the front surface of the container P1 while following the front surface of the container P1.

In this case, the uncut portions 218, 219, 221, and 222 are broken by a pressing force applied to the front surface of the container P1 by the guide rollers 202 and 203. Accordingly, side portions other than the uncut portions 217 and 220 on the tear-off line 20 are elastically deformed following the curved front surface of the container P1 due to the flexibility of the base material sheet 10, and are pressed against the front surface of the container P1.

Accordingly, the antenna 50 formed on the base material sheet 10 is attached to the second adhesive A2 applied to the front surface of the container P1.

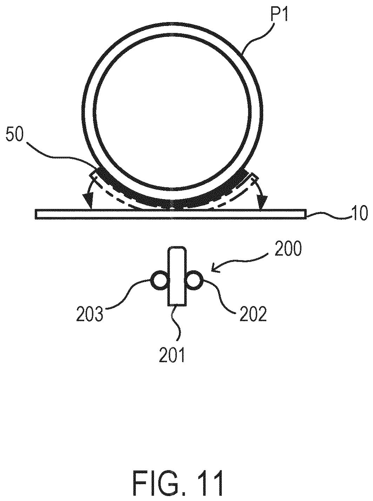

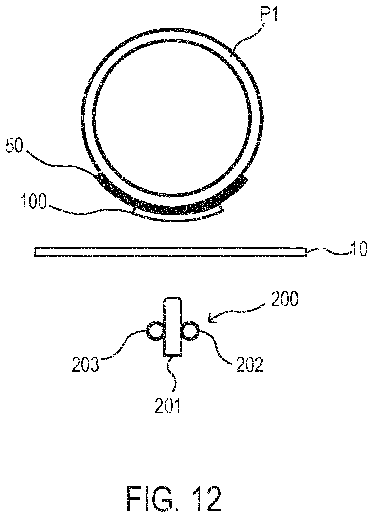

FIG. 11 is a view illustrating a state in which the antenna 50 is peeled off from the base material sheet 10 and attached to the front surface of the container P1. FIG. 12 is a view illustrating a state in which the antenna 50 is attached to the front surface of the container P1.

The portion of the base material sheet 10 elastically deformed along an outer surface of the container P1, which is partitioned by the tear-off line 20, attempts to return to the same surface as the surrounding base material sheet 10 due to elasticity of the base material sheet 10 while leaving the antenna 50 attached to the front surface of the container P1 by the second adhesive A2 on the front surface of the container P1.

With respect to the uncut portion 43 and the cut portions 44 and 45 as well as the uncut portion 46 and the cut portions 47 and 48 that are formed in a peripheral portion of the tear-off line 30 and the IC chip 70 of the base material sheet 10, the uncut portions 35, 36, 37 and 38 and the uncut portions 43 and 46 are set to a width length with which the uncut portions 35, 36, 37 and 38 and the uncut portions 43 and 46 can be broken.

Therefore, as illustrated in FIG. 12, when the base material sheet 10 is moved away from the front surface of the container P1, the uncut portions 35, 36, 37, and 38 and the uncut portions 43 and 46 are broken and the surrounding base material sheet 10 is separated in a state in which an inner region of the tear-off line 30 and a surrounding region to which the IC chip 70 is fixed are attached to the container P1 due to the adhesive force of the second adhesive A2.

Accordingly, in the base material sheet 10, the portion partitioned by the tear-off line 30, that is, the printed portion 90 on which the identification code is printed and the portion (corresponding to the protective base material 100) partitioning the region to which the IC chip 70 is fixed are separated from the base material sheet 10, and are left on the front surface of the container P1 together with the antenna 50.

When the base material sheet 10 is moved away from the container P1, in order to smoothly peel off the antenna 50 from the base material sheet 10 and improve separability between the printed portion 90 and the protective base material 100 from the base material sheet 10, the adhesive force of the second adhesive A2 is preferably larger than the adhesive force of the first adhesive A1.

After the antenna 50, the printed portion 90, and the protective base material 100 are attached to the container P1 from the base material sheet 10, a process of covering the front surface of the container P1 including the antenna 50, the printed portion 90, and the protective base material 100 with a protective film layer is executed.

Accordingly, the antenna 50, the printed portion 90, and the protective base material 100 can be prevented from being peeled off from the container P1.

### [Functions and Effects]

According to the manufacturing method for an RFID container according to the present embodiment, since the antenna 50 to which the IC chip 70 is fixed can be directly formed on the front surface of the container P1, the IC chip 70 and the antenna 50 can be prevented from removing off even in a severe environment such as extremely low temperature or high temperature and high humidity, and the IC chip 70 and the antenna 50 can be reliably mounted on the container without failure, as compared with a case where the RFID inlay in which the antenna and the IC chip are provided on the inlay base material is attached to the container as a label or attached to the container as a tag.

According to the manufacturing method of the present embodiment, a part of a base material cut from the base material sheet 10 is the protective base material 100, and can cover a fixed portion between the IC chip 70 and the antenna 50. Therefore, in order to prevent damage to the IC chip 70, there is no need to separately prepare a process of attaching the protective base material.

Further, according to the manufacturing method of the present embodiment, the information printed on the base material sheet 10 can be separated from the base material sheet 10 and attached to the container P1 together with the antenna 50. Accordingly, in the present embodiment, when the antenna 50 is formed in the container P1, identification information such as the identification code can be included in the container P1 in advance.

Therefore, for example, a container to which an identification code is attached can be manufactured by receiving necessary identification information from a customer in advance, encoding the identification information into the identification code, and incorporating the encoded information into the container. Accordingly, there is no need for the customer to print the identification code for managing the container P1 and contents thereof. In addition, when the container P1 is delivered to a hand of the customer, since the identification code for identifying the container P1 is already attached, it is easy to associate the container P1 with the contents when managing the container P1, the contents, and the like.

### [Other Embodiments]

Although the embodiments of the present invention have been described above, the above embodiments are merely a part of application examples of the present invention, and are not intended to limit the technical scope of the present invention to the specific configuration of the above embodiments. The scope of protection is only defined by the appended claims.

In the present embodiment, the base material sheet 10 can be applied, instead of the resin sheet, as long as the base material sheet 10 is a material having transparency to an extent that printing of the identification code or the like can be read from the rear surface side with respect to a printing surface, and can ensure the strength to an extent that the uncut portions 35, 36, 37, and 38 and the uncut portions 43 and 46 are not broken in a process before the processes described with reference to the above-described FIGS. 7 to 12, and a paper material can be used instead of the resin sheet.

In the present embodiment, the reference mark 11 may be printed on only one of the side edge portions 111 and 112. In addition, each of the plurality of reference marks 11 may be printed at an interval corresponding to the pitch of the antenna 50, and is not limited to be printed at the positions illustrated in FIG. 2 and the like.

The reference marks 11 may be printed by a printing device other than the printer. Further, in addition to the printer or the printing device provided in a device for realizing the manufacturing method, the reference marks 11 may be formed in advance on the base material sheet 10 by another printer or printing device.

In the present embodiment, since the uncut portions 218, 219, 221, and 222 serving as the first uncut portion are provided to prevent the cut out base material sheet 10 from being unnecessarily lifted up when the base material sheet 10 is conveyed, positions where the uncut portions are formed are not limited to the positions illustrated in FIG. 2.

By appropriately selecting the material and thickness of the base material sheet 10, in a case where a problem such as lifting up of the cut out base material sheet 10 at the time of conveyance does not occur, it is not necessary to provide the uncut portions 218 and 219, and the cut portions 212, 213, and 214 may be formed as one continuous notch. Similarly, the cut portions 211, 215, and 216 may be formed as one continuous notch.

In the present embodiment, in a first cutting process, the cut portions 211, 212, 213, 214, 215, and 216 as the first cut portion and the uncut portions 217, 218, 219, 220, 221, and 222 as the first uncut portion are formed at one time.

In contrast, the cut portions 211, 212, 213, 214, 215, and 216 and the uncut portions 217, 218, 219, 220, 221, and 222 may be formed through a further cutting process including a plurality of stages. For example, the cut portions 212, 213, and 214 and the cut portions 32 and 33 may be formed at the same timing, and the cut portions 211, 215, and 216 and the cut portions 31 and 34 may be formed at a next timing.

In the process illustrated in FIG. 3, the first adhesive A1 can also be applied to the conveyed base material sheet 10 by using flexographic printing, gravure printing, screen printing, or the like.

An identification mark printed on the printed portion 90 illustrated in FIG. 6 may be printed by a printing device in addition to the printing by the printer. Further, in addition to the printer or the printing device provided in the device for realizing the manufacturing method, the identification mark may be formed on the base material sheet 10 by another printer or printing device.

Although FIG. 7 illustrates that the second adhesive A2 is provided on the front surface of the container P1, the second adhesive A2 may be provided on the antenna 50 formed on the base material sheet 10.

In addition, as illustrated in FIGS. 7 to 12, in addition to the method in which the antenna 50 formed on the base material sheet 10 is attached to the container P1, the antenna 50 is left in the container P1 by the adhesive force of the second adhesive A2, and the base material sheet 10 is peeled off from the antenna 50, the antenna 50 to which the IC chip 70 is fixed may be peeled off from the base material sheet 10, the antenna 50 may be transferred to another base material such that an adhesion surface between the base material sheet 10 and the antenna 50 becomes a front surface, and the antenna 50 may be attached to the container from the another base material.

As described above, since the process of forming the antenna 50 on the base material sheet 10 and the process of attaching the antenna 50 to the container can be separated by temporarily transferring the antenna 50 to another base material, a degree of freedom in manufacturing is increased.

In the present embodiment, the tear-off line 30 that partitions the printed portion 90 on which the identification code is printed is formed before the process of temporarily attaching the antenna 50 to the base material sheet. However, the tear-off line 30 may be formed in the process of forming the antenna 50 using the die roll for forming the antenna 50.

The process of attaching the antenna 50 to the container P1 described with reference to FIGS. 7 to 12 is an example suitably used for a cylindrical container P1. In the present embodiment, a form and a shape of the container P1 are not limited to the test tube of the embodiment. For example, the container may be a box, a bag, or the like.

## Claims

1. A manufacturing method for an RFID container (P1) having an antenna (50) and an IC chip (70), comprising:
a process of temporarily attaching the antenna (50) to a base material (10) by a first adhesive (A1); and
a process of fixing the IC chip (70) to the antenna (50);
**characterized in that**
the manufacturing method further comprises:
a process of attaching a front surface of the container (P1) and a surface of the base material (10) on which the antenna (50) is formed by a second adhesive (A2); and
a process of removing, while leaving a partial region of the base material (10) covering the IC chip (70) on the front surface of the container (P1), a region of the base material (10) other than the partial region covering the IC chip (70) from the container (P1).

2. The manufacturing method for an RFID container (P1) according to claim 1, wherein
the first adhesive (A1) is a removable paste.

3. The manufacturing method for an RFID container (P1) according to claim 1 or 2, wherein
an adhesive force of the second adhesive (A2) is larger than an adhesive force of the first adhesive (A1).

4. A manufacturing method for an RFID container (P1) according to any one of claims 1 to 3, further comprising:
a process of forming a first tear-off line (20, 41, 42) having a first cut portion (211, 212, 213, 214, 215, 216) and a first uncut portion (217, 218, 219, 220, 221, 222) around the partial region of the base material (10) before the process of temporarily attaching the antenna (50) to the base material (10).

5. The manufacturing method for an RFID container (P1) according to claim 4, further comprising:
a process of providing the first adhesive (A1) inside with respect to a perimeter line of the antenna (50) arranged on the base material (10);
a process of arranging a metal sheet constituting the antenna (50) on a surface on which the first adhesive (A1) is provided;
a process of cutting out the metal sheet into a shape of the antenna (50); and
a process of removing an unnecessary portion of the metal sheet not constituting the antenna (50), wherein
a part of the first tear-off line (20, 41, 42) is formed before the process of temporarily attaching the antenna (50) to the base material (10), and
a remaining part of the first tear-off line (20, 41, 42) is formed in the process of cutting out the metal sheet into the shape of the antenna (50).

6. The manufacturing method for an RFID container (P1) according to claim 4 or 5, further comprising:
a process of forming a second tear-off line (30) having a second cut portion (31, 32, 33, 34) and a second uncut portion (35, 36, 37, 38) around a region where the antenna (50) is formed on the base material (10).

7. The manufacturing method for an RFID container according to claim 6, wherein
the second tear-off line (30) is formed before the process of temporarily attaching the antenna (50) to the base material (10).

8. The manufacturing method for an RFID container (P1) according to any one of claims 1 to 7, wherein
the IC chip (70) is connected to the antenna (50) by an adhesive that is cured by an ultraviolet ray.

9. The manufacturing method for an RFID container (P1) according to any one of claims 1 to 8, wherein
an identification code is reversely printed on the base material (10), and
the base material (10) has transparency such that the identification code is recognizable from a rear surface side.

10. The manufacturing method for an RFID container (P1) according to any one of claims 1 to 9, wherein
the partial region of the base material (10) covering the IC chip (70) is pressed against the IC chip (70) by a pressing member (201).

11. The manufacturing method for an RFID container (P1) according to any one of claims 1 to 10, wherein
a portion other than the partial region of the base material (10) covering the IC chip (70) is removed from the container (P1), and then the partial region of the base material (10) remained on the front surface of the container (P1) and the antenna (50) are covered with a protective film layer.

12. An RFID container (P1), wherein
an adhesive layer (A2) is provided on a surface having an IC chip (70) and an antenna (50) to which the IC chip (70) is fixed, and
the antenna (50) is attached in a state where the surface having the IC chip (70) faces a front surface of the container (P1),
**characterized in that**
a partial region of the antenna (50) covering the IC chip (70) is covered with a protective base material (100).

13. The RFID container (P1) according to claim 12, wherein
the protective base material (100) and the antenna (50) are covered with a protective film layer.

14. The RFID container P1) according to claim 12 or 13, wherein
the protective base material (100) has transparency such that information printed on a front surface thereof is recognizable from a rear surface side.

## Patentansprüche

1. Herstellverfahren für einen RFID-Behälter (P1) mit einer Antenne (50) und einem IC-Chip (70), umfassend:
einen Prozess zum vorübergehenden Anbringen der Antenne (50) an einem Basismaterial (10) durch einen ersten Klebstoff (A1); und
einen Prozess zum Befestigen des IC-Chips (70) an der Antenne (50);
**dadurch gekennzeichnet, dass**
das Herstellverfahren ferner umfasst:
einen Prozess zum Anbringen einer vorderen Fläche des Behälters (P1) und einer Fläche des Basismaterials (10), auf der die Antenne (50) gebildet ist, durch einen zweiten Klebstoff (A2); und
einen Prozess zum Entfernen eines anderen Bereichs des Basismaterials (10) als des den IC-Chip (70) abdeckenden Teilbereichs vom Behälter (P1), wobei ein den IC-Chip (70) abdeckender Teilbereich des Basismaterials (10) auf der vorderen Fläche des Behälters (P1) verbleibt.

2. Herstellverfahren für einen RFID-Behälter (P1) nach Anspruch 1, wobei der erste Klebstoff (A1) eine entfernbare Paste ist.

3. Herstellverfahren für einen RFID-Behälter (P1) nach Anspruch 1 oder 2, wobei eine Klebekraft des zweiten Klebstoffs (A2) größer ist als eine Klebekraft des ersten Klebstoffs (A1).

4. Herstellverfahren für einen RFID-Behälter (P1) nach einem der Ansprüche 1 bis 3, ferner umfassend:
einen Prozess zum Bilden einer ersten Abreißlinie (20, 41, 42) mit einem ersten geschnittenen Abschnitt (211, 212, 213, 214, 215, 216) und einem ersten ungeschnittenen Abschnitt (217, 218, 219, 220, 221, 222) um den Teilbereich des Basismaterials (10) vor dem Prozess zum vorübergehenden Anbringen der Antenne (50) am Basismaterial (10).

5. Herstellverfahren für einen RFID-Behälter (P1) nach Anspruch 4, ferner umfassend:
einen Prozess zum Bereitstellen des ersten Klebstoffs (A1) im Inneren in Bezug auf eine Umfangslinie der auf dem Basismaterial (10) angeordneten Antenne (50);
einen Prozess zum Anordnen eines Blechs, das die Antenne (50) darstellt, auf einer Fläche, auf welcher der erste Klebstoff (A1) angeordnet ist;
einen Prozess zum Ausschneiden des Blechs in eine Form der Antenne (50); und
einen Prozess zum Entfernen eines nicht benötigten Abschnitts des Blechs, der nicht die Antenne (50) darstellt, wobei
ein Teil der ersten Abreißlinie (20, 41, 42) vor dem Prozess des vorübergehenden Anbringens der Antenne (50) am Basismaterial (10) gebildet wird, und
ein verbleibender Teil der ersten Abreißlinie (20, 41, 42) beim Ausschneiden des Blechs in die Form der Antenne (50) gebildet wird.

6. Herstellverfahren für einen RFID-Behälter (P1) nach Anspruch 4 oder 5, ferner umfassend:
einen Prozess zum Bilden einer zweiten Abreißlinie (30) mit einem zweiten geschnittenen Abschnitt (31, 32, 33, 34) und einem zweiten ungeschnittenen Abschnitt (35, 36, 37, 38) um einen Bereich herum, in dem die Antenne (50) auf dem Basismaterial (10) gebildet ist.

7. Herstellverfahren für einen RFID-Behälter nach Anspruch 6, wobei
die zweite Abreißlinie (30) vor dem Prozess des vorübergehenden Anbringens der Antenne (50) am Basismaterial (10) gebildet wird.

8. Herstellverfahren für einen RFID-Behälter (P1) nach einem der Ansprüche 1 bis 7, wobei
der IC-Chip (70) mit der Antenne (50) durch einen Klebstoff verbunden wird, der durch ultraviolette Strahlung gehärtet wird.

9. Herstellverfahren für einen RFID-Behälter (P1) nach einem der Ansprüche 1 bis 8, wobei
ein Identifizierungscode rückseitig auf das Basismaterial (10) gedruckt wird, und
das Basismaterial (10) eine solche Transparenz aufweist, dass der Identifikationscode von einer Rückseite aus erkennbar ist.

10. Herstellverfahren für einen RFID-Behälter (P1) nach einem der Ansprüche 1 bis 9, wobei
der den IC-Chip (70) abdeckende Teilbereich des Basismaterials (10) durch ein Andrückelement (201) gegen den IC-Chip (70) gedrückt wird.

11. Herstellverfahren für einen RFID-Behälter (P1) nach einem der Ansprüche 1 bis 10, wobei
ein anderer Abschnitt als der den IC-Chip (70) abdeckende Teilbereich des Basismaterials (10) vom Behälter (P1) entfernt wird und anschließend der auf der vorderen Fläche des Behälters (P1) verbliebene Teilbereich des Basismaterials (10) und die Antenne (50) mit einer Schutzfilmschicht abgedeckt werden.

12. RFID-Behälter (P1), wobei
eine Klebstoffschicht (A2) auf einer Fläche mit einem IC-Chip (70) und einer Antenne (50), an welcher der IC-Chip (70) befestigt ist, angeordnet ist, und
die Antenne (50) in einem Zustand angebracht wird, in dem die Fläche mit dem IC-Chip (70) einer vorderen Fläche des Behälters (P1) zugewandt ist,
**dadurch gekennzeichnet, dass**
ein Teilbereich der Antenne (50), der den IC-Chip (70) abdeckt, mit einem schützenden Basismaterial (100) abgedeckt wird.

13. RFID-Behälter (P1) nach Anspruch 12, wobei
das schützende Basismaterial (100) und die Antenne (50) mit einer Schutzfilmschicht abgedeckt werden.

14. RFID-Behälter (P1) nach Anspruch 12 oder 13, wobei
das schützende Basismaterial (100) eine solche Transparenz aufweist, dass die auf seiner vorderen Fläche aufgedruckten Informationen von einer Rückseite her erkennbar sind.

## Revendications

1. Procédé de fabrication d'un contenant RFID (P1) ayant une antenne (50) et un microcircuit intégré (70), comprenant :
une opération consistant à fixer temporairement l'antenne (50) à un matériau de base (10) au moyen d'un premier adhésif (A1) ; et
une opération consistant à fixer le microcircuit intégré (70) à l'antenne (50) ;
**caractérisé en ce que**
le procédé de fabrication comprend en outre :
une opération consistant à fixer une surface avant du contenant (P1) et une surface du matériau de base (10) sur laquelle est formée l'antenne (50) au moyen d'un second adhésif (A2) ; et
une opération consistant à éliminer du contenant (P1), tout en laissant une région partielle du matériau de base (10) recouvrant le microcircuit intégré (70) sur la surface avant du contenant (P1), une région du matériau de base (10) autre que la région partielle recouvrant le microcircuit intégré (70).

2. Procédé de fabrication d'un contenant RFID (P1) selon la revendication 1, dans lequel le premier adhésif (A1) est une pâte qui peut s'éliminer.

3. Procédé de fabrication d'un contenant RFID (P1) selon la revendication 1 ou 2, dans lequel une force adhésive du second adhésif (A2) est supérieure à une force adhésive du premier adhésif (A1).

4. Procédé de fabrication d'un contenant RFID (P1) selon l'une quelconque des revendications 1 à 3, comprenant en outre :
une opération consistant à former une première ligne déchirable (20, 41, 42) ayant une première portion découpée (211, 212, 213, 214, 215, 216) et une première portion non découpée (217, 218, 219, 220, 221, 222) autour de la région partielle du matériau de base (10) avant l'opération consistant à fixer temporairement l'antenne (50) au matériau de base (10).

5. Procédé de fabrication d'un contenant RFID (P1) selon la revendication 4, comprenant en outre :
une opération consistant à fournir le premier adhésif (A1) à l'intérieur par rapport à une ligne de périmètre de l'antenne (50) disposée sur le matériau de base (10) ;
une opération consistant à disposer une feuille métallique constituant l'antenne (50) sur une surface sur laquelle est fourni le premier adhésif (A1) ;
une opération consistant à découper la feuille métallique dans une forme de l'antenne (50) ; et
une opération consistant à éliminer une portion non nécessaire de la feuille métallique ne constituant pas l'antenne (50), dans lequel
une partie de la première ligne déchirable (20, 41, 42) est formée avant l'opération consistant à fixer temporairement l'antenne (50) au matériau de base (10), et
une partie résiduelle de la première ligne déchirable (20, 41, 42) est formée lors de l'opération consistant à découper la feuille métallique dans la forme de l'antenne (50).

6. Procédé de fabrication d'un contenant RFID (P1) selon la revendication 4 ou 5, comprenant en outre :
une opération consistant à former une seconde ligne déchirable (30) ayant une seconde portion découpée (31, 32, 33, 34) et une seconde portion non découpée (35, 36, 37, 38) autour d'une région où l'antenne (50) est formée sur le matériau de base (10).

7. Procédé de fabrication d'un contenant RFID selon la revendication 6, dans lequel
la seconde ligne déchirable (30) est formée avant l'opération consistant à fixer temporairement l'antenne (50) au matériau de base (10).

8. Procédé de fabrication d'un contenant RFID (P1) selon l'une quelconque des revendications 1 à 7, dans lequel
le microcircuit intégré (70) est relié à l'antenne (50) au moyen d'un adhésif qui est durci par un rayon ultraviolet.

9. Procédé de fabrication d'un contenant RFID (P1) selon l'une quelconque des revendications 1 à 8, dans lequel
un code d'identification est imprimé à l'envers sur le matériau de base (10), et
le matériau de base (10) présente une transparence telle que le code d'identification peut être reconnu depuis un côté de surface arrière.

10. Procédé de fabrication d'un contenant RFID (P1) selon l'une quelconque des revendications 1 à 9, dans lequel
la région partielle du matériau de base (10) recouvrant le microcircuit intégré (70) est pressée contre le microcircuit intégré (70) au moyen d'un élément de pressage (201).

11. Procédé de fabrication d'un contenant RFID (P1) selon l'une quelconque des revendications 1 à 10, dans lequel
une portion autre que la région partielle du matériau de base (10) recouvrant le microcircuit intégré (70) est éliminée du contenant (P1), puis la région partielle du matériau de base (10) restant sur la surface avant du contenant (P1) et l'antenne (50) sont recouvertes d'une couche de pellicule protectrice.

12. Contenant RFID (P1), dans lequel
une couche adhésive (A2) est fournie sur une surface ayant un microcircuit intégré (70) et une antenne (50) à laquelle est fixé le microcircuit intégré (70), et
l'antenne (50) est fixée dans un état dans lequel la surface ayant le microcircuit intégré (70) fait face à une surface avant du contenant (P1),
**caractérisé en ce que**
une région partielle de l'antenne (50) recouvrant le microcircuit intégré (70) est recouverte d'un matériau de base protecteur (100).

13. Contenant RFID (P1) selon la revendication 12, dans lequel
le matériau de base protecteur (100) et l'antenne (50) sont recouverts d'une couche de pellicule protectrice.

14. Contenant RFID (P1) selon la revendication 12 ou 13, dans lequel
le matériau de base protecteur (100) présente une transparence telle que des informations imprimées sur une surface avant de celui-ci peuvent être reconnues depuis un côté de surface arrière.
